# EUROPEAN PATENT APPLICATION

(11) **EP 3 299 911 A1**
(43) Date of publication of application: **28.03.2018**
(21) Application number: 16190106.1
(22) Date of filing: 22.09.2016
(51) Int. Cl.: G05B 19/042, G05B 23/02

(54) **METHOD AND SYSTEM FOR DYNAMICALLY MONITORING AND CONTROLLING AN INDUSTRIAL PLANT**

(71) Applicant: Siemens Aktiengesellschaft, 80333 München (DE)
(72) Inventor: Kulkarni, Nikhil Vishwas, 560062 Bangalore (IN)
(74) Representative: Isarpatent

(57) **Abstract**

The present invention provides a method and system for dynamically monitoring and controlling an industrial plant. A method comprises detecting a runtime event associated with a human-machine interface (412A-N) of an industrial automation system (402, 406, 410A-N) in an industrial plant. The method comprises selecting an operator task corresponding to the detected runtime event from a plurality of operator tasks. The plurality of operator tasks is pre-programmed via the human-machine interface (412A-N) for execution during runtime. The method comprises automatically executing the operator task at the human-machine interface (412A-N), whereby the operator task is associated with monitoring and controlling activity of the industrial plant.

## Description

The present invention relates to the field of industrial automation, and more particularly relates dynamically monitoring and controlling an industrial plant.

In today's world of complex industrial systems, industrial automation systems are used to monitor, control and regulate technical processes in an industrial plant. In an industrial plant, an industrial automation system employs human-machine interface (HMI) devices to provide a means for operator to monitor and control various aspects of the industrial plant. An HMI device is a computer-controlled component that provides various graphical screens containing different types of graphical controls (e.g., Faceplates, alarm screens, operator logging screens, system diagnostics screens, recipe management screens, etc.) on a human-machine interface to the operator, and is responsive to inputs from the operator. Activities such as monitoring settings for temperatures and pressures, starting and stopping processes, reviewing sensor readings and setting actuator values and the like may all be controlled through the HMI devices. Other activities also may fall within the purview of the operator. Thus, the HMI device enables the operator to monitor and control various process operations in the industrial plant based on the graphical visualization of the process operations. For example, the operator accesses a desired graphical screen, analyzes runtime process values displayed on the graphical screen, and takes suitable action via the graphical control(s) displayed on the graphical screen based on process requirements in the act of monitoring and controlling the process operations.

In a typical industrial plant, an operator requires to view different graphical screens displayed on a HMI device for monitoring process operations simultaneously with operating the industrial plant. In some instances, the operator is required to view different graphical screens at the same time, analyze whether runtime process values are within acceptable limit, and initiate necessary action if the runtime process values are outside the acceptable limit which is a cumbersome task. This may lead to erroneous and untimely operator actions, thereby affecting the process operations in the industrial plant.

In light of the above, there exists a need to provide an industrial automation system for dynamically monitoring and controlling an industrial plant.

Therefore, it is the object of the present invention to provide a method and system for dynamically monitoring and controlling the industrial plant based on pre-programmed operator tasks.

The object of the present invention is achieved by a method of dynamically monitoring and controlling an industrial plant. The method comprises detecting a runtime event associated with a human-machine interface of an industrial automation system in the industrial plant, and selecting at least one operator task corresponding to the detected runtime event from a plurality of operator tasks. The plurality of operator tasks is preprogrammed for execution at the human-machine interface at runtime. Furthermore, the method comprises automatically executing the at least one operator task at the human-machine interface. The at least one operator task is associated with monitoring and controlling of the industrial plant.

Furthermore, the method comprises receiving a request to preprogram the at least one operator task corresponding to the runtime event, and pre-programming the at least one operator task which is to be executed at the human-machine interface upon detecting the runtime event. Also, the method comprises storing the pre-programmed operator task corresponding to the runtime event in a pre-programmed tasks database. Additionally, the method comprises authenticating the request to pre-program the at least one operator task corresponding to the runtime event.

Moreover, the method comprises recording the at least one operation performed at the human-machine interface during execution of the at least one operator task, and storing the recorded operation performed at the human-machine interface in a project database.

Therein, in selecting the at least one operator task corresponding to the detected runtime event, the method comprises determining whether any operator task corresponding to the detected runtime event is pre-programmed by an operator of the human-machine interface. If any operator task is preprogrammed by the operator, the method comprises selecting the at least one operator task from the plurality of operator tasks in response to the detected runtime event. If no operator task is pre-programmed by the operator, the method comprises requesting the operator of the human-machine interface to provide inputs to perform the operator task.

Therein, in automatically executing the at least one operator task at the human-machine interface, the method comprises automatically performing at least one operation at the human-machine interface to execute the at least one operator task. The at least one operation at the human-machine interface is performed at the human-machine interface simultaneously with another task performed by the operator corresponding to different event. The at least one operation is performed with respect to at least one graphical object on the human-machine interface.

The object of the present invention is also achieved by an industrial automation device comprising a processor, and a memory coupled to the processor. The memory comprises a HMI module capable of detecting a runtime event associated with a human-machine interface, and selecting at least one operator task corresponding to the detected runtime event from a plurality of operator tasks. The at least one operator task is pre-programmed for execution at the human-machine interface during runtime. The HMI module is capable of automatically executing the at least one operator task at the human-machine interface, wherein the at least one operator task is associated with monitoring and controlling of the industrial plant.

Additionally, the HMI module is capable of receiving a request to pre-program the at least one operator task corresponding to the runtime event, and authenticating the request to pre-program the at least one operator task corresponding to the runtime event. The HMI module is also capable of pre-programming the at least one operator task which is to be executed at the human-machine interface upon detecting the runtime event, and storing the pre-programmed operator task corresponding to the runtime event in a pre-programmed tasks database.

Furthermore, the HMI module is capable of recording the at least one operation performed at the human-machine interface during execution of the at least one operator task, and storing the recorded operation performed at the human-machine interface in the project database.

Therein, in selecting the at least one operator task from the plurality of operator tasks, the HMI module is capable of determining whether any operator task corresponding to the detected runtime event is pre-programmed by an operator. If any operator task is pre-programmed by the operator, the HMI module is capable of selecting the at least one operator task to be executed at the human-machine interface in response to the detected runtime event. If no operator task is pre-programmed by the operator, the HMI module is capable of requesting the operator of the human-machine interface to provide inputs to perform an operator task.

Therein, in automatically executing the at least one operator task at the human-machine interface, the HMI module is capable of automatically performing at least one operation at the human-machine interface to execute the at least one operation task.

The object of the present invention is achieved by an industrial automation system employing an industrial automation device as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an industrial automation device for dynamically monitoring and controlling an industrial plant, according to an embodiment of the present invention;
- FIG 2: is a process flowchart illustrating an exemplary method of preprogramming operator tasks to be executed by the industrial automation device at a human-machine interface during runtime, according to an embodiment of the present invention.
- FIG 3: is a process flowchart illustrating an exemplary method of automatically executing the pre-programmed operator tasks at the human-machine interface during runtime, according to an embodiment of the present invention.
- FIG 4A: is a schematic representation of an industrial automation system which facilitates in dynamically monitoring and controlling an industrial plant, according to one embodiment of the present invention.
- FIG 4B: is a schematic representation of an industrial automation system which facilitates in dynamically monitoring and controlling an industrial plant, according to another embodiment of the present invention.
- FIG 4C: is a schematic representation of an industrial automation system which facilitates in dynamically monitoring and controlling an industrial plant, according to yet another embodiment of the present invention.
- FIG 5: is a screenshot view of a human-machine interface of a human-machine interface device which enables an operator to request pre-programming operator tasks to be executed during runtime.
- FIG 6: is a screenshot view of a human-machine interface of a human-machine interface device which automatically navigates to a desired graphical screen based on a pre-programmed operator task.
- FIG 7: is a screenshot view of a human-machine interface of a human-machine interface device which automatically displays a faceplate instance based on a preprogrammed operator task.
- FIG 8: is a screenshot view of a human-machine interface of a human-machine interface device which sets a value in a HMI tag based on a pre-programmed operator task.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

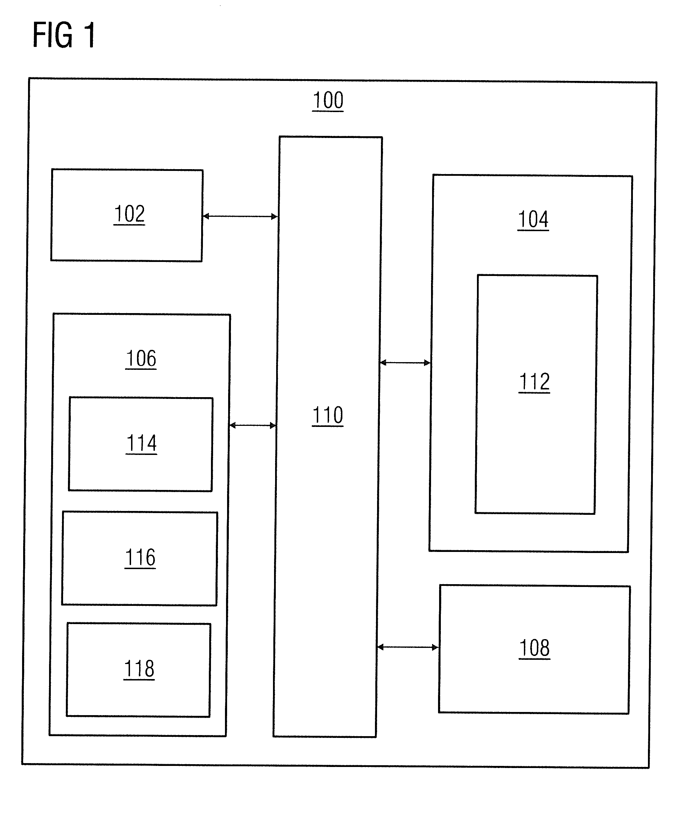

FIG 1 illustrates a block diagram of an exemplary industrial automation device 100 capable of dynamically monitoring and controlling an industrial plant, according to an embodiment of the present invention. The industrial automation device 100 may be a part of an industrial automation system deployed in the industrial plant. In FIG 1, the industrial automation device 100 comprises a processor 102, a memory 104, a storage unit 106, input/output unit 108, and a bus 110.

The processor 102, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 102 may also include embedded controllers, such as generic or programmable logic devices or arrays, application specific integrated circuits, single-chip computers, and the like.

The memory 104 may be volatile memory and non-volatile memory. A variety of computer-readable storage media may be stored in and accessed from the memory 104. The memory 104 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 104 includes a HMI module 110. The HMI module 112 is stored in the form of machine-readable instructions on any of the above-mentioned storage media and may be executed by the processor 102.

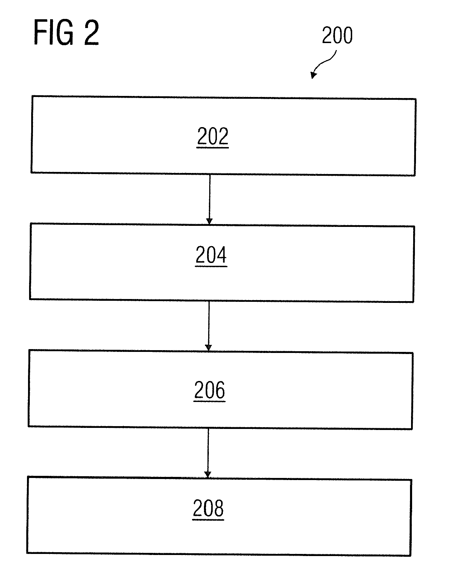

For example, when the instructions are executed by the processor 102, the HMI module 112, causes the processor 102, to preprogram one or more operator tasks to be executed at a human-machine interface during runtime mode upon occurrence of respective events. For example, the HMI module 112 may enable an operator to define operator tasks to be automatically executed at the human-machine interface upon occurrence of the runtime event. The operator tasks may include navigation of graphical screens, opening graphical screens as new window, opening faceplates, setting parameter values in faceplates, acknowledgement of alarms, set/reset commands on process variable tags, start/stop batch operations and the like. The processor 102 may pre-program the operator tasks using a script written in a scripting language. The detailed steps performed by the processor 102 to pre-program the operator tasks are described below with reference to FIG 2 in the description that follows.

The HMI module 112 causes the processor 102 to detect a runtime event associated with the human-machine interface. The runtime event may be an event associated with a graphical object displayed on the human-machine interface. The HMI module 112 causes the processor 102 to automatically execute a preprogrammed operator task corresponding to the detected runtime event at the human-machine interface. To execute the preprogrammed operator task, the processor 102 performs one or more operations on graphical objects (e.g., graphical screens, graphical controls, tags, etc.) of the human-machine interface during runtime. The processor 102 performs the operations associated with the pre-programmed operator task by executing a script associated with the pre-programmed operator task. For example, if the operator has pre-programmed an operator task such as navigate to a specific graphics screen on a particular HMI, the processor 102 automatically navigates and displays the specific graphical screen on the requested human-machine interface. In some embodiments, the processor 102 performs the operations associated with the pre-programmed operator tasks simultaneously while the operator manually performs another task corresponding to a different event on the human-machine interface.

It can be noted that the processor 102 executes the operator tasks without the intervention of the operator during runtime mode of the human-machine interface. The processor 102 executes the operator tasks, pre-programmed by the operator, at the human-machine interface in which the operator is successfully logged into. Alternatively, the processor 102 executes the operator tasks, pre-programmed by the operator, at another human-machine interface associated with different operator.

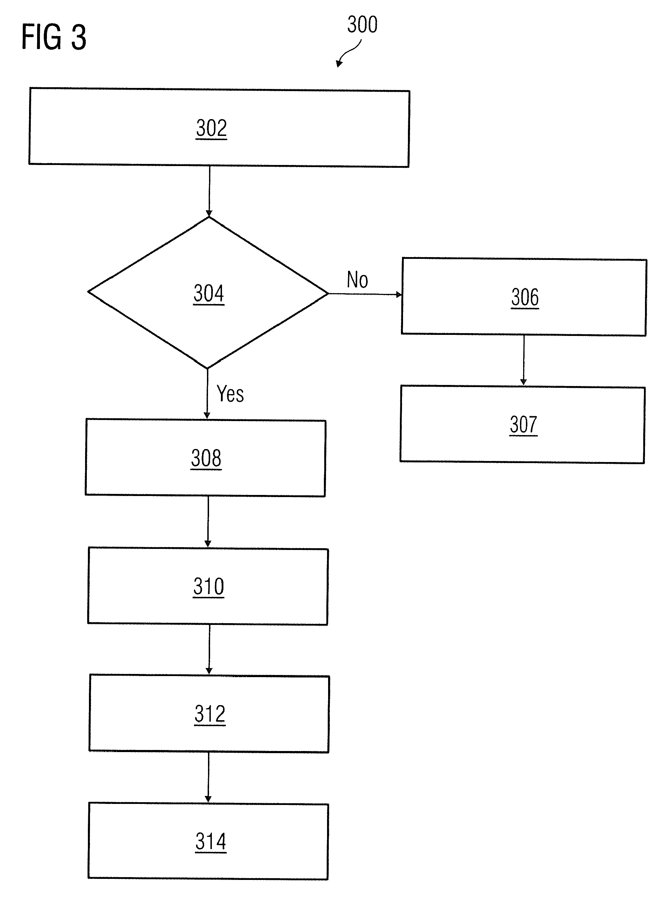

Additionally, the HMI module 112 causes the processor 102 to record the one or more operations performed to execute the preprogrammed operator tasks at the human-machine interface. This enables the operator to review the behavior of the human-machine interface during execution of the pre-programmed operator tasks and take corrective actions if needed. In this manner, the industrial automation device 100 dynamically monitors and controls process operations in the industrial plant based on the pre-programmed operator tasks. Advantageously, time and effort required for the operator to monitor and control the process operations using the human-machine interface are significantly reduced. The steps performed by the processor 102 to execute pre-programmed operator tasks at a human-machine interface are described in greater detail with reference to FIG 3 in the description that follows.

The storage unit 106 may be a non-transitory storage medium configured for storing a pre-programmed tasks database 114, a look-up database 116, and a project database 118. The preprogrammed tasks database 114 for storing machine-readable instructions to execute pre-programmed operator tasks in a runtime environment. For example, the machine-readable instructions may be linked to scripts written in a scripting language when the operator defines the operator tasks to be proprogrammed via a human-machine interface. The scripts are programs written for runtime environment of an industrial automation system to automate execution of operator tasks that could have been normally executed by the operator at the human-machine interface if not pre-programmed.

The lookup database 116 may store look-up tables containing information associated with pre-programmed operator tasks, corresponding runtime events which trigger execution of the operator tasks, and corresponding methods to be called for automatic execution of the operator tasks at the human-machine interface. The look-up tables are maintained such that each look-up table may be associated with specific operator.

The project database 118 may store recorded operations which are performed at the human-machine interface during execution of an operator task. The project database 118 may also store graphical screens, graphical controls associated with the graphical screens, and associated tag and its parameters. During runtime mode, the industrial automation device 100 displays the graphical screens containing graphical control and associated tag values on the human-machine interface by accessing the project database 118.

The input/output unit 108 may include keyboard, keypad, monitor, touch sensitive display screen, mouse and the like. The input device/output unit 108 enables the operator to interface with the industrial automation device 100 for pre-programming operator tasks. For example, the input/output unit 108 may be a human-machine interface which enables the operator to preprogram operator tasks in advance. The human-machine interface can acts as an output unit when the operator tasks are automatically executed in runtime at the human-machine interface. It can be noted that, the human-machine interface may be integrated with the industrial automation device or coupled with the industrial automation device 100 via an industrial network.

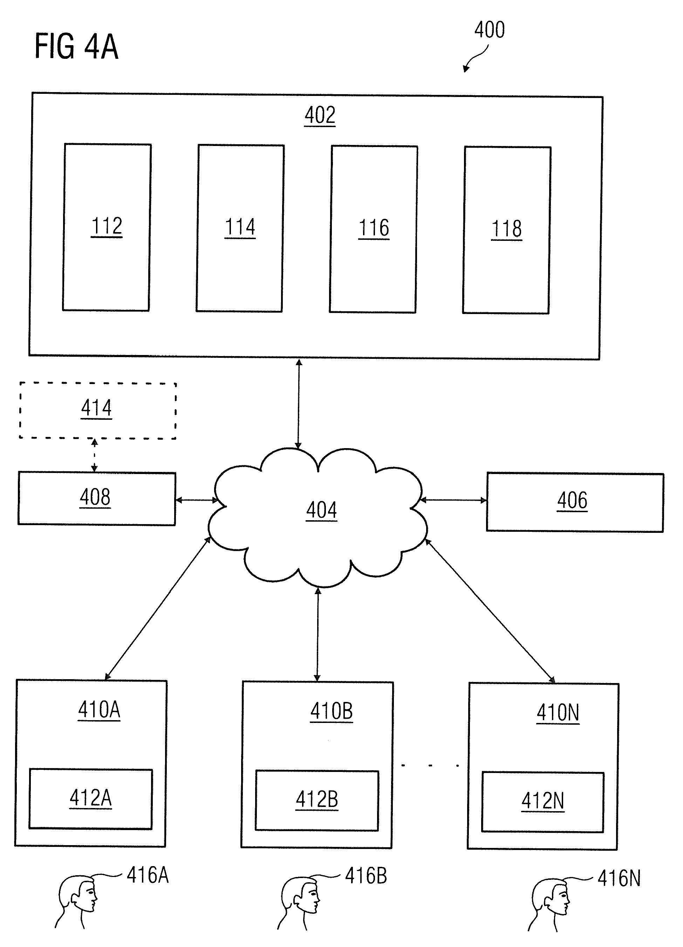

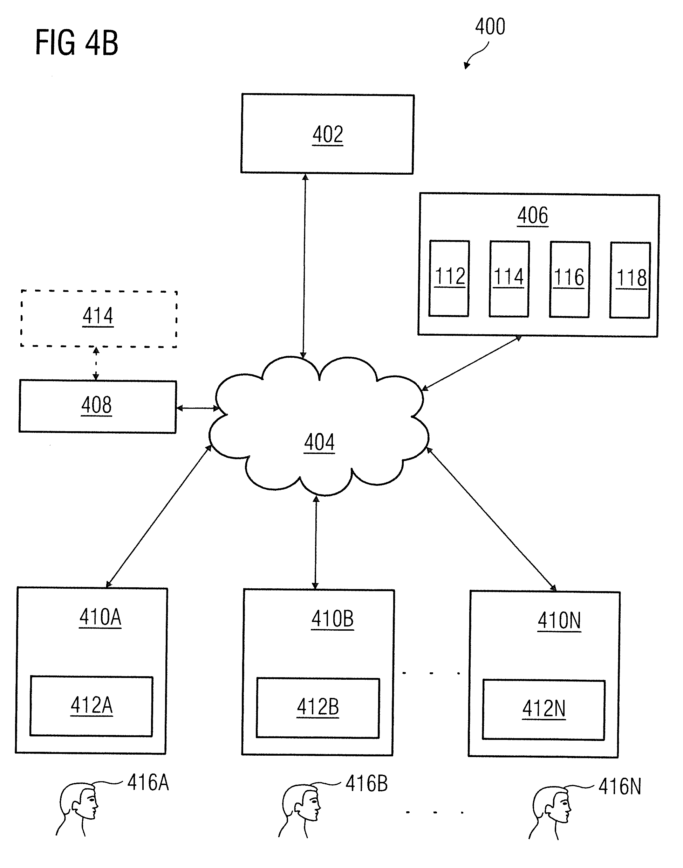

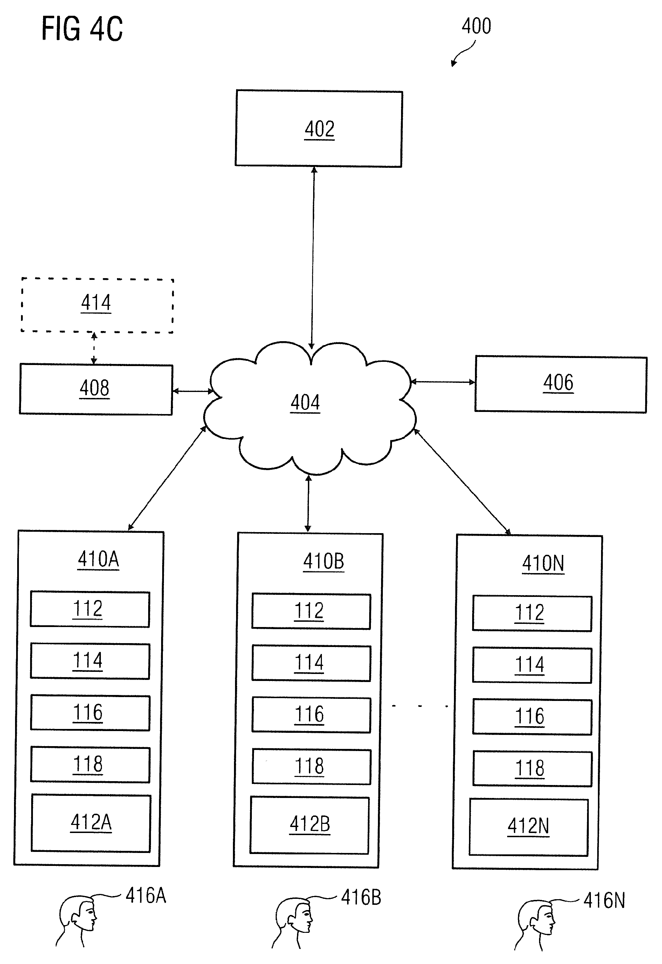

In one embodiment, the industrial automation device 100 can be a server associated with an industrial automation system deployed in an industrial plant wherein the HMI module 112 resides in the server as illustrated in FIG 4A. In another embodiment, the industrial automation device 100 can be an automation controller of an industrial automation system deployed in an industrial plant, wherein the HMI module 112 resides in the automation controller as illustrated in FIG 4B. In yet another embodiment, the industrial automation device 100 can be a human-machine interface device of an industrial automation system deployed in an industrial plant, wherein the HMI module 112 resides in the human-machine interface device as illustrated in FIG 4C.

FIG 2 is a process flowchart 200 illustrating an exemplary method of preprogramming operator tasks to be executed by the industrial automation device 100 at a human-machine interface during runtime, according to an embodiment of the present invention. At step 202, a request to preprogram an operator task is received from a human-machine interface by the industrial automation device 100 during runtime mode. The operator task is a task normally assigned to the operator or expected to be performed by the operator at the human-machine interface upon occurrence of a runtime event at the human-machine interface. The request is initiated by an operator of the human-machine interface device via the human-machine interface. Since the industrial automation device 100 is capable of automatically performing the operator task at the human-machine interface in runtime without the intervention of the operator, the operator sends the request to the industrial automation device 100 to preprogram the operator task. For example, the operator may define operator tasks that need to be pre-programmed via the human-machine interface prior to or after occurrence of the runtime event.

At step 204, the request to preprogram the operator task is authenticated by the industrial automation device 100. For example, the industrial automation device 100 verifies credentials of the operator and authenticates the request to pre-program the operator task if the credentials of the operator are successfully verified. One skilled in the art will understand that any other technique known in the art can be used to authenticate the request.

At step 206, the operator task corresponding to the runtime event is preprogrammed by the industrial automation device 100. For example, the industrial automation device 100 may generate machine-readable instructions for executing the operator task during runtime based on the request. The machine-readable instructions may be linked to a script written by the operator (i.e., the request from the operator). At step 208, the preprogrammed operator task is stored in the pre-programmed tasks database 114. For example, the industrial automation device 100 may store the pre-programmed operator task, associated runtime event and reference to the machine-readable instructions to be executed to perform the operator task in a single entry in a look-up table. Accordingly, during runtime, the industrial automation device 100 may refer to the look-up table to identify and execute the operator task at the human-machine interface upon occurrence of the runtime event.

FIG 3 is a process flowchart 300 illustrating an exemplary method of automatically executing pre-programmed operator tasks at a human-machine interface during runtime, according to an embodiment of the present invention. At step 302, a runtime event associated with a human-machine interface is detected. For example, the runtime event is associated with a graphical object of the human-machine interface. The runtime event may be operator triggered event, time-based event, process-based event and the like. The operator triggered event may be an event occurred based on operator action such as a mouse click, opening of a screen, at the human-machine interface. The time-based event may be an event triggered at a time preset by the operator of the human-machine interface. The process-based event may be an event triggered due to change in process values in the industrial plant. For example, an alarm event at the human-machine interface may be a process-based event.

At step 304, it is determined whether any operator task corresponding to the detected runtime event is pre-programmed by an operator. For example, the industrial automation device 100 may refer to a look-up table associated with the operator and determine whether any operator tasks for the detected runtime event is pre-programmed for execution at the human-machine interface. It can be noted that the operator task can be preprogrammed prior to or after occurrence of the runtime event which requires execution of the operator task at the human-machine interface.

If the operator task is not pre-programmed, then at step 306, an input from the operator is received via the human-machine interface. For example, the operator may perform one or more actions at the human-machine interface. Accordingly, at step 307, an operator task is performed based on the input from the operator. If the operator task is pre-programmed, then at step 308, an operator task is selected from a plurality of operator tasks using the look-up table based on the detected runtime event. For example, the industrial automation device 100 may refer to the detected runtime event in the look-up table and select corresponding operator task for execution at the human-machine interface.

At step 310, the selected operator task corresponding to the detected runtime event is automatically executed at the human-machine interface during runtime. The one or more operations are performed at the human-machine interface during runtime to execute the operator task. For example, the one or more operations are performed on graphical objects (e.g., graphical screens, graphical controls, tag values, etc.) associated with the human-machine interface by executing the script corresponding to the selected operator task stored in the preprogrammed tasks database 114. In some embodiments, the industrial automation device invokes and executes method calls (i.e., machine-readable instructions) corresponding to the script to perform the operations at the human-machine interface.

At step 312, one or more operations performed at the human-machine interface to execute the operator tasks are recorded. For example, the operations are recorded in a pre-defined file format. At step 314, the recorded operations performed at the human-machine interface are stored in the project database 118. The human-machine interface allows the operator to access the recorded operations stored in the project database 118. The recorded operations enable the operator to review the behavior of the human-machine interface during execution of the operator task. Additionally, when an operator tasks is to be performed in real-time, the recorded operations are fetched from the project database 118 and executed at the human-machine interface.

FIG 4A is a schematic representation of an industrial automation system 400A which facilitates in dynamically monitoring and controlling an industrial plant, according to one embodiment of the present invention. In FIG 4A, the industrial automation system 400A comprises a server 402, one or more industrial automation controllers 406, field devices 408, and HMI devices 410A-N. The server 402, industrial automation controllers 406, field devices 408, and HMI devices 410A-N communicate with each other via an industrial network such as Industrial Ethernet.

The server 402 is an exemplary implementation of the industrial automation device 100 of FIG 1. The server 402 consists of the HMI module 112, the pre-programmed tasks database 114, the lookup database 116, and the project database 118. Although, not shown in FIG 4A, the server 102 may include a processing unit, a memory for storing the HMI module 112 in the form of machine-readable instructions, and a storage unit for storing the preprogrammed tasks database 114, the look-up database 116, and the project database 118. Additionally, the server 402 may include a communication interface for communicating with other components of the industrial automation system 400A. The machine-readable instructions stored on the memory are executed by the processing unit to dynamically monitor and control the industrial plant.

The industrial automation controllers 406 is a logic processor such as programmable logic controller, programmed to operate the industrial plant based on user designed logic programs. The field devices 408 are devices which interact with various industrial equipments in the industrial plant to sense a parameter associated with the industrial equipments 414 or operating upon the processes associated with the industrial equipments 414.

The human-machine interface (HMI) devices 410A-N are devices which interact with the industrial automation controllers 406. The HMI devices 410A-N may also directly interact with the field devices 408. The HMI devices 410A-N provide human-machine interfaces 412A-N which enable respective operators 416A-N to visualize process operations in the industrial plant in a graphical form. The HMI devices 410A-N may be desktop-based HMI devices, HMI panels, web-based HMI devices, mobile devices, or Personal Digital Assistant (PDA).

According to the present invention, the HMI module 112 residing in the server 402 enables dynamic monitoring and controlling of the industrial plant as described in the description of FIG 1. For example, the server 402 facilitates the operators 416A-N to pre-program operator tasks corresponding to runtime events. In such case, the operators 416A-N of respective HMI devices 410A-N define operator tasks to be pre-programmed using the human-machine interfaces 412A-N. Accordingly, the respective HMI devices 410A-N sends a request to pre-program the operator tasks to the server 402. The request may include an identifier associated with the operator tasks, and information of a HMI device on which the operator tasks needs to be executed during runtime. The server 402 executes the HMI module 112 to preprogram the operator tasks based on the request received from the HMI devices 410A-N.

During runtime mode, the server 402 automatically executes the pre-programmed operator tasks at the respective human-machine interfaces 412A-N upon occurrence of corresponding runtime events. The server 402 also records sequence of operations performed at the respective human-machine interfaces 412A-N during execution of the pre-programmed operator tasks.

FIG 4B is a schematic representation of an industrial automation system 400B which facilitates in dynamically monitoring and controlling an industrial plant, according to another embodiment of the present invention. In FIG 4B, the industrial automation controllers 406 is an exemplary embodiment of the industrial automation device 100 of FIG 1. Each of the industrial automation controllers 406 includes the HMI module 112, the preprogrammed tasks database 114, the look-up database 116, and the project database 118. Each of the industrial automation controllers 406 is configured to pre-program operator tasks based on a request from the operators 416A-N and execute the operator tasks at the associated HMI devices 410A-N during runtime. Alternatively, one of the industrial automation controllers 406 is configured to pre-program operator tasks corresponding to runtime events of human-machine interface, and automatically execute one or more operator tasks at the respective HMI devices 4102A-N. In such case, such industrial automation controller 406 stores the HMI module 112, the preprogrammed tasks database 114, the look-up database 116, and the project database 118.

According to the present invention, the HMI module 112 residing in the industrial automation controllers 406 enable dynamic monitoring and controlling of the industrial plant as described in the description of FIG 1. For example, the industrial automation controllers 406 facilitate the operators 416A-N to pre-program operator tasks corresponding to runtime events. In such case, the operators 416A-N of respective HMI devices 410A-N define operator tasks to be pre-programmed using the human-machine interfaces 412A-N. Accordingly, the respective HMI devices 410A-N sends a request to pre-program the operator tasks to the respective industrial automation controllers 406. The industrial automation controllers 406 executes the HMI module 112 to pre-program the operator tasks based on the request received from the respective HMI devices 410A-N.

During runtime mode, the industrial automation controllers 406 automatically execute the pre-programmed operator tasks at the respective human-machine interfaces 412A-N upon occurrence of corresponding runtime events. The industrial automation controllers 406 also record a sequence of operations performed at the respective human-machine interfaces 412A-N during execution of the pre-programmed operator tasks.

FIG 4C is a schematic representation of an industrial automation system 400C which facilitates in dynamically monitoring and controlling an industrial plant, according to yet another embodiment of the present invention. In FIG 4C, each of the HMI devices 410A-N is an exemplary embodiment of the industrial automation device 100 of FIG 1. Each of the HMI devices 410A-N includes the HMI module 112, the pre-programmed tasks database 114, the look-up database 116, and the project database 118. Each of the HMI devices 410A-N is configured to pre-program operator tasks based on a request from the respective operators 416A-N and execute the pre-programmed operator tasks at the associated HMI 412A-N during runtime.

According to the present invention, the HMI module 112 residing in the HMI devices 410A-N enable dynamic monitoring and controlling of the industrial plant as described in the description of FIG 1. For example, the HMI devices 410A-N facilitate the operators 416A-N to pre-program operator tasks corresponding to runtime events. In such case, the operators 416A-N of respective HMI devices 410A-N define operator tasks to be pre-programmed using the human-machine interfaces 412A-N during runtime mode. Accordingly, the respective HMI devices 410A-N executes the HMI module 112 to pre-program the operator tasks based on the request received from the respective operators 416A-N.

During runtime mode, each of the HMI devices 410A-N automatically executes the pre-programmed operator tasks at the respective human-machine interfaces 412A-N upon occurrence of corresponding runtime events. The HMI devices 410A-N also record a sequence of operations performed at the respective human-machine interfaces 412A-N during execution of the pre-programmed operator tasks.

In accordance with the foregoing description, the industrial automation systems 400A-C illustrated in FIGs 4A-4C is an exemplary implementation of a distributed monitoring and control system. Also, the industrial automation systems 400A-C may be cloud-based system, wherein one or more components such as the HMI module 112 of the industrial automation systems may be deployed on a cloud infrastructure.

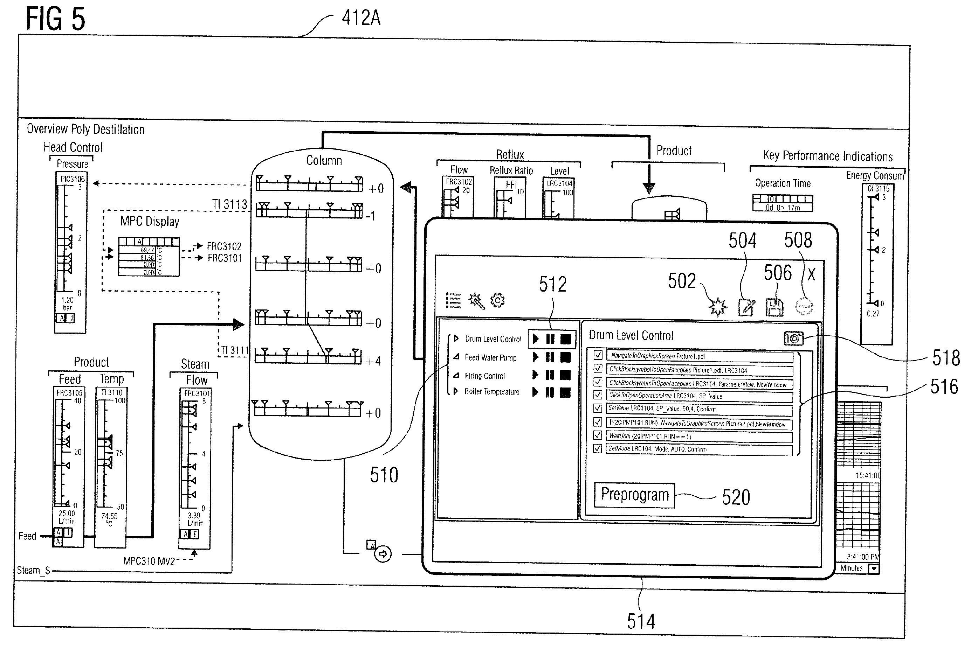

FIG 5 is a screenshot view 500 of a human-machine interface 412A of the HMI device 410A which enables the operator 416A to preprogram operator tasks to be executed during runtime. As depicted in FIG 5, the human-machine interface 412A displays a create program widget 502, an edit program widget 504, a save program widget 506, and an authorization to execute program widget 508.

The create program widget 502 enables the operator 416A to preprogram an operator task. The edit program widget 504 facilitates the operator 416A to modify or update the preprogrammed operator tasks. The save program widget 506 allows the operator 416A to save the modified pre-programmed operator task. The authorization widget 508 authenticates the operator to pre-program the operator task based on credentials of the operator. For example, the operator is allowed to preprogram the operator task if the operator is authorized and authenticated successfully.

Also, the human-machine interface 412A displays different preprogrammed operator tasks associated with the operator 416A in an operator tasks field 510. For example, the operator tasks field 510 displays pre-programmed operator tasks associated with 'drum level control', 'feed water pump', 'firing control', and 'boiler temperature'. The operator tasks field 510 also displays an execution control wizard 512 inconjunction with each of the pre-programmed operator tasks. The operator tasks field 510 enables start, stop or pause one or more operations associated with the pre-programmed operator tasks during runtime. For example, the execution control wizard 512 enables to start, stop or pause 'Drum Level Control' operator task if needed as depicted in FIG 5.

When the operator 402 interfaces with the create program widget 502, the human-machine interface 412A displays a program operator task window 514 which display a plurality of fields 516, a record operations widget 518, and pre-program operator task button 520. The plurality of fields 516 facilitates the operator 416A to define a sequence of operations for preprogramming the operator task. The record operations widget 518 enables the operator 416A to request the industrial automation device 100 for recording the sequence of operations during execution of the operator task. The pre-program operator task button 520 enables the operator to request pre-programming of the operator task based on the sequence of operations defined in the pre-program operator task window 514. Accordingly, when the operator 416A interfaces with the pre-program operator task button, the HMI module 112 of the industrial automation device 100 pre-programs the operator tasks in the manner described in FIG 2.

For example, consider that the operator 416A wishes to preprogram an operator task related to drum level control'. In such case, the operator 412A touches the create program widget displayed on the human-machine interface 412A. Accordingly, the human-machine interface 412A displays the program operator task window 514 with the fields 516. The operator 416A defines a sequence of operations in the fields 516 associated with the operator task - drum level control. Thereafter, the operator 416A touches the pre-program operator task button 520 to request pre-programming of the operator task. Accordingly, the industrial automation device 100 pre-programs the operator tasks based on the request from the operator 416A. During runtime mode, the industrial automation device 100 automatically executes the sequence of operations associated with the preprogrammed operator task (i.e., drum level control) at the human-machine interface 412A.

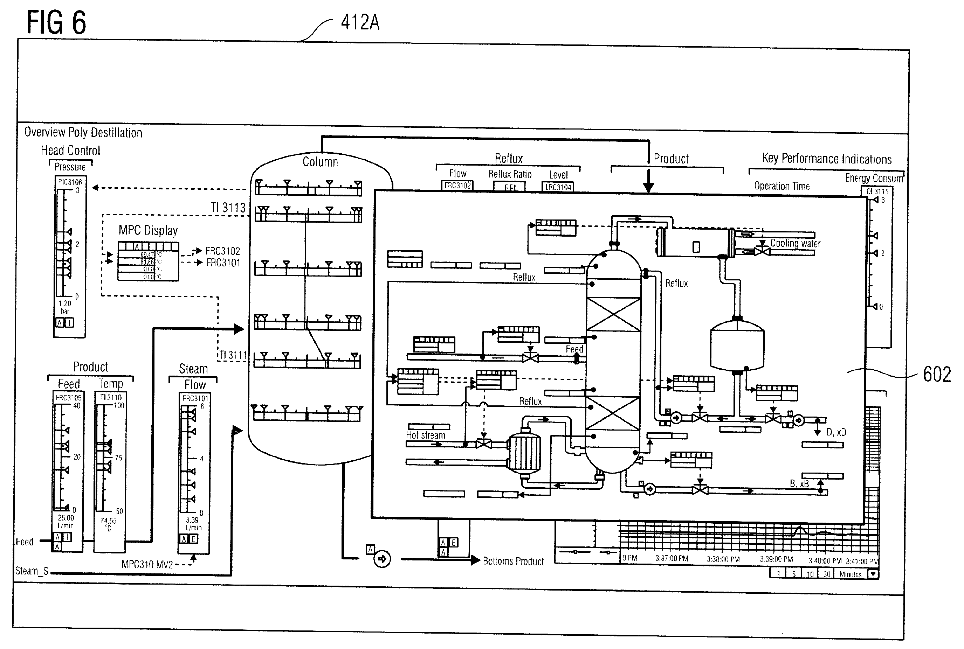

FIG 6 is a screenshot view of the human-machine interface 412A of the HMI device 410A which automatically navigates to a desired graphical screen based on a pre-programmed operator task. Consider that the operator 416A pre-programmed an operator task to navigate to a desired graphical screen on the human-machine interface device 412A. During runtime mode of the HMI device 410A, the industrial automation device 100 access the project database 118 which stores graphical screens and determines whether the graphical screens contain a desired graphical screen. If the desired graphical screen is available, the industrial automation device 100 determines whether a HMI device (e.g., HMI device 410A) on which the operator 416A wishes to open the desired graphical screen is available. The above step is performed if the industrial automation device 100 is other than the HMI device 410A.

If the HMI device 410A is available, the industrial automation device 100 fires a click mouse event on the HMI device 410A. Then, the industrial automation device 100 determines whether the desired graphical screen is to be displayed in a new window. If the desired graphical screen is to be displayed in the new window, then the industrial automation device 100 displays the desired graphical screen in the new window. Otherwise, the industrial automation device 100 displays the graphical screen 602 in the existing window on the human-machine interface 412A as depicted in FIG 6. For example, the desired graphical screen 602 is displayed as an overlay over currently displayed graphical screen as shown in FIG 6. In this manner, the industrial automation device 100 automatically executes the preprogrammed operator task of navigating to a desired graphical screen 602 during runtime mode of the human-machine interface 412A.

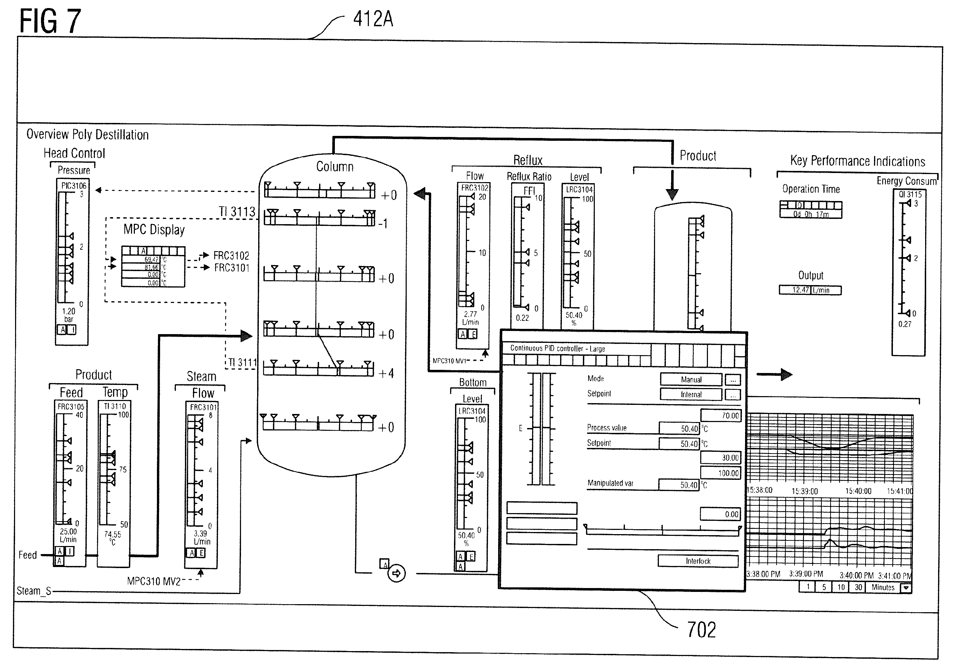

FIG 7 is a screenshot view of the human-machine interface 412A of the HMI device 410A which automatically displays a faceplate instance based on a pre-programmed operator task. Consider that the operator 416A pre-programmed an operator task to open a faceplate instance associated with a graphical screen on the human-machine interface device 412A. During runtime mode of the HMI device 410A, the industrial automation device 100 access the project database 118 which stores graphical screens and determines whether the graphical screens contain the graphical screen associated with the faceplate instance. If the desired graphical screen is available, the industrial automation device 100 determines whether a HMI device (e.g., HMI device 410A) on which the operator 416A wishes to open the faceplate instance is available.

If the HMI device 410A is available, the industrial automation device 100 identifies a graphical control associated with the faceplate in the graphical screen and fires a click mouse event with reference to the graphical control on the HMI device 410A. Accordingly, the industrial automation device 100 displays the faceplate instance 702 on the human-machine interface 412A as depicted in FIG 7. For example, the faceplate instance 702 is displayed as an overlay over currently displayed graphical screen as shown in FIG 7. In this manner, the industrial automation device 100 automatically executes the pre-programmed operator task of opening a faceplate instance 702 during runtime mode of the human-machine interface 412A.

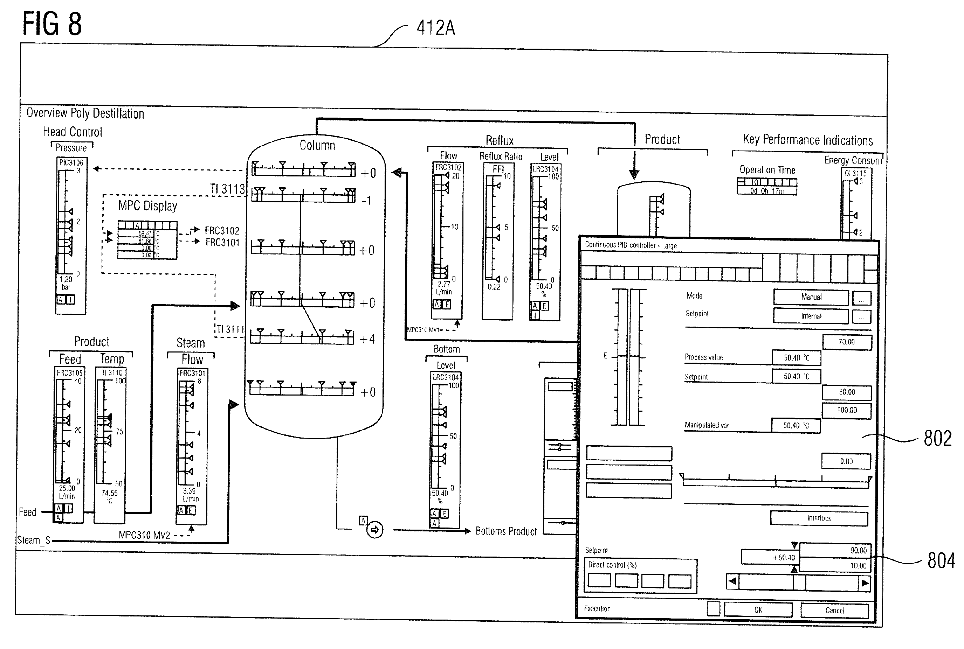

FIG 8 is a screenshot view of the human-machine interface 412A of the HMI device 410A which sets a value in a HMI tag based on a pre-programmed operator task. Consider that the operator 416A pre-programmed an operator task to set value of HMI tags associated with a graphical control displayed in a graphical screen. During runtime mode of the HMI device 410A, the industrial automation device 100 extracts a graphical screen and a graphical control in the graphical screen associated with a HMI tag name whose value is to be modified from the project database 118. The industrial automation device 100 associates the extracted graphical control with sub-parameter of tag value.

The industrial automation system 100 determines whether the operator 416A is successfully authenticated. If the operator 416A is successfully authenticated, the industrial automation system 100 fires click mouse event on the extracted graphical control in the HMI device 410A. The industrial automation device 100 sets a value of the HMI tag if quality code is not bad and closes all confirmation dialogs which are open, as shown in FIG 8. In this manner, the industrial automation device 100 automatically executes the pre-programmed operator task of setting a HMI tag value of a graphical control 804 in the graphical screen 802 during runtime mode of the human-machine interface 412A.

In various embodiments illustrated in FIGs 1 to 8, the present invention enables pre-programming of operator task so that the pre-programmed operator tasks are automatically performed at a human-machine interface during runtime mode. This facilitates in parallel execution of multiple operator tasks during runtime mode. Also, the present invention helps the operator to monitor and control activities in an industrial plant while the operator is busy attending critical process operations in the industrial plant. Additionally, the present invention provides secured preprogramming of operator tasks by authenticating the operator before processing the request to pre-program. Thus, the present invention provides faster and secure response to process requirements in the industrial plant and eliminates operational errors.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of references

- 100 -: Industrial automation device
- 102 -: Processor
- 104 -: Accessible memory
- 106 -: Storage unit
- 108 -: Display unit
- 110 -: Bus
- 112 -: HMI Module
- 114 -: Pre-programmed tasks database
- 116 -: Look-up database
- 118 -: Project database
- 402 -: Server
- 404 -: Industrial Network
- 406 -: Industrial automation controller
- 408 -: Field devices
- 410A-N -: Human-machine interface devices
- 412A-N -: Human-machine interfaces
- 414 -: Industrial equipments
- 416A-N -: Operators
- 502 -: Create program widget
- 504 -: Edit program widget
- 506 -: Save program widget
- 508 -: Authorization to execute program widget
- 510 -: Operator tasks field
- 512 -: Execution control wizard
- 514 -: Program operator task window
- 516 -: Fields
- 518 -: Record operations widget
- 520 -: Pre-program operator task button
- 602 -: Graphical screen
- 702 -: Faceplate instance
- 802 -: Graphical screen
- 804 -: Graphical control

## Claims

1. A method of dynamically monitoring and controlling an industrial plant comprising:
detecting, by an industrial automation device (100, 402, 406, 410A-N), a runtime event associated with a human-machine interface (412A-N) of an industrial automation system (400A-C) in the industrial plant;
selecting, by the industrial automation device (100, 402, 406, 410A-N), at least one operator task corresponding to the detected runtime event from a plurality of operator tasks, wherein the plurality of operator tasks are pre-programmed for execution at the human-machine interface (412A-N) at runtime; and
automatically executing, by the industrial automation device (100, 402, 406, 410A-N), the at least one operator task at the human-machine interface (412A-N).

2. The method according to claim 1, wherein the at least one operator task is associated with monitoring and controlling of the industrial plant.

3. The method according to claim 1, wherein selecting the at least one operator task corresponding to the detected runtime event comprises:
determining whether any operator task corresponding to the detected runtime event is pre-programmed by an operator (416A-N) of the human-machine interface (412A-N);
if any operator task is pre-programmed by the operator (416AN), selecting the at least one operator task from the plurality of operator tasks in response to the detected runtime event; and if no operator task is pre-programmed by the operator (416A-N), requesting the operator (416A-N) of the human-machine interface (412A-N) to provide inputs to perform an operator task.

4. The method according to claim 3, wherein automatically executing the at least one operator task at the human-machine interface (412A-N) comprises:
automatically performing at least one operation at the human-machine interface (412A-N) to execute the at least one operation task.

5. The method according to claim 1, further comprising:
receiving a request to pre-program the at least one operator task corresponding to the runtime event;
pre-programming the at least one operator task which is to be executed at the human-machine interface (412A-N) upon detecting the runtime event; and
storing the pre-programmed operator task corresponding to the runtime event in a pre-programmed tasks database (114).

6. The method according to claim 5, further comprising:
authenticating the request to pre-program the at least one operator task corresponding to the runtime event.

7. The method according to claim 4, further comprising:
recording the at least one operation performed at the human-machine interface (412A-N) during execution of the at least one operator task; and
storing the recorded operation performed at the human-machine interface (412A-N) in a project database (118).

8. The method according to claim 4, wherein performing the at least one operation at the human-machine interface (412A-N) comprises:
performing the at least one operation at the human-machine interface (412A-N) simultaneously with another task performed by the operator (416A-N) corresponding to different event.

9. The method according to claim 4, wherein the at least one operation is performed with respect to at least one graphical object on the human-machine interface (412A-N).

10. An industrial automation device (100) comprising:
a processor (102); and
a memory (104) coupled to the processor (102), **characterized in that** the memory comprises a HMI module (112) capable of:
detecting a runtime event associated with a human-machine interface (412A-N);
selecting at least one operator task corresponding to the detected runtime event from a plurality of operator tasks, wherein the at least one operator task is pre-programmed for execution at the human-machine interface (412A-N) during runtime; and
automatically executing the at least one operator task at the human-machine interface (412A-N), wherein the at least one operator task is associated with monitoring and controlling of the industrial plant.

11. The industrial automation device (100) according to claim 10, wherein in selecting the at least one operator task from the plurality of operator tasks, the HMI module (112) is capable of:
determining whether any operator task corresponding to the detected runtime event is pre-programmed by an operator (416AN) ;
if any operator task is pre-programmed by the operator (416AN), selecting the at least one operator task to be executed at the human-machine interface (412A-N) in response to the detected runtime event; and
if no operator task is pre-programmed by the operator (416A-N), requesting the operator (416A-N) of the human-machine interface (412A-N) to provide inputs to perform the operator task.

12. The industrial automation device (100) according to claim 11, wherein in automatically executing the at least one operator task at the human-machine interface (412A-N), the HMI module (112) is capable of:
automatically performing at least one operation at the human-machine interface (412A-N) to execute the at least one operation task.

13. The industrial automation device (100) according to claim 10, wherein the HMI module (112) is capable of:
receiving a request to pre-program the at least one operator task corresponding to the runtime event;
authenticating the request to pre-program the at least one operator task corresponding to the runtime event;
pre-programming the at least one operator task which is to be executed at the human-machine interface (412A-N) upon detecting the runtime event; and
storing the pre-programmed operator task corresponding to the runtime event in a pre-programmed tasks database (114).

14. The industrial automation device (100) according to claim 10, wherein the HMI module (112) is capable of:
recording the at least one operation performed at the human-machine interface (412A-N) during execution of the at least one operator task; and
storing the recorded operation performed at the human-machine interface (412A-N) in a project database (118).

15. An industrial automation system (400A-C) comprising an industrial automation device (100, 402, 406, 416A-C) according to the claims 10-14.
